# EUROPEAN PATENT APPLICATION

(11) **EP 1 531 461 A1**
(43) Date of publication of application: **18.05.2005**
(21) Application number: 03730502.6
(22) Date of filing: 16.05.2003
(51) Int. Cl.: G11B 7/0065, G06K 7/12, G06K 19/00

(54) **HOLOGRAM SYSTEM**

(30) Priority: 01.08.2002 JP 2002225054
(71) Applicant: Pioneer Corporation, Tokyo 153-8654 (JP)
(72) Inventor: ITOH, Yoshihisa; c/o Corporate R&D Laboratory, Tsurugashima-shi, Saitama 350-2288 (JP); TANAKA, Satoru; c/o Corporate R&D Laboratory, Tsurugashima-shi, Saitama 350-2288 (JP); TACHIBANA, Akihiro; c/o Corporate R&D Laboratory, Tsurugashima-shi, Saitama 350-2288 (JP); KUBOTA, Yoshihisa; c/o Corporate R&D Laboratory, Tsurugashima-shi, Saitama 350-2288 (JP); KURODA, Kazuo; c/o Corporate R&D Laboratory, Tsurugashima-shi, Saitama 350-2288 (JP); SUGIURA, Satoshi; c/o Corporate R&D Laboratory, Tsurugashima-shi, Saitama 350-2288 (JP)
(74) Representative: Manitz, Finsterwald & Partner GbR
(86) International application number: PCT/JP2003/006143
(87) International publication number: WO 2004/019330

(57) **Abstract**

A compatible hologram system has a supporting part for loadably supporting a recording medium made of a photosensitive material, a signal generating part for allowing a coherent beam modulated in response to predetermined data to enter the recording medium and providing a three-dimensional light interference pattern therewithin to produce a diffraction grating, and a data processing part for detecting reproduced data by diffracted light from the diffraction grating and demodulating the data to the predetermined data. The recording medium has a reference data area in which a reference diffraction grating corresponding to a three-dimensional light interference pattern of a coherent light beam modulated in response to reference data has been stored in advance, a sector data area in which sector data is recorded, and a user data area in which user data is recorded. The hologram system corrects the reproduced data in response to the reference data reproduced from the reference diffraction grating stored in the reference data area, the sector data reproduced from the sector area, and reference data provided within a reference memory of the data processing part, and demodulates the data to the predetermined data.

## Description

### TECHNICAL FIELD

The present invention relates to a holographic recording medium and a recording and reproduction system utilizing the same.

### BACKGROUND ART

Conventionally, as a digital recording system applying the principle of holography, a holographic memory system is known. The holographic memory system is for recording and reproducing light and shade dot pattern data in a recording medium of a photorefractive crystal such as lithium niobate, for example. In the holographic memory system, data can be recorded and reproduced in units of two-dimensional plane pages and multiple recording can be performed using plural pages. In a recording medium as a kind of Fourier transform holograms, recording is performed in units of two-dimensional image pages while being dispersed within three-dimensional space of the recording medium. As below, an overview of a recording and reproduction system will be described.

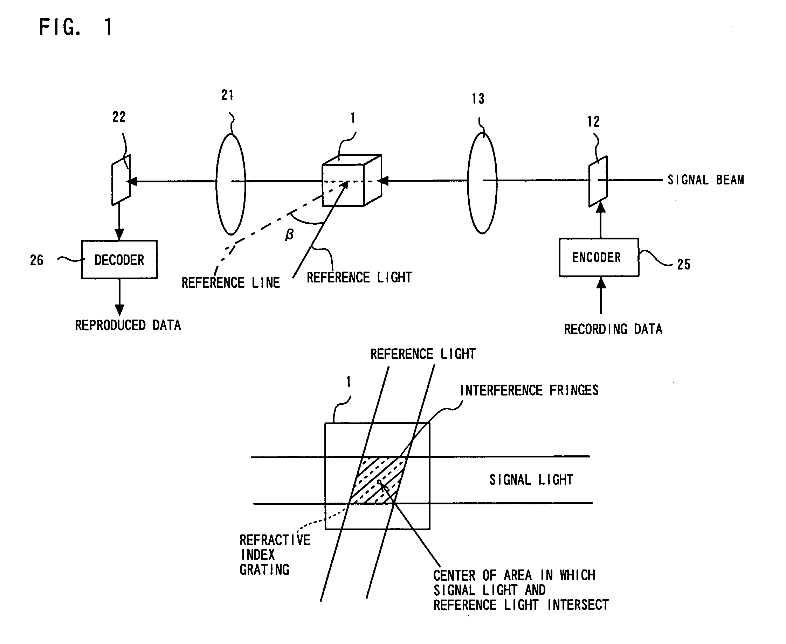

In Fig. 1, an encoder 25 converts digital data to be recorded in a recording medium 1 on a plane as a light and shade dot pattern image, and rearranges it in a data array of lengthwise 480 bits × widthwise 640 bits, for example, to produce unit page series data. This data is sent out to a spatial light modulator (SLM) 12 such as a panel of a transmissive TFT (Thin Film Transistor) liquid crystal display (hereinafter, also referred to as "LCD").

The spatial light modulator 12 has a modulation processing unit of lengthwise 480 bits × widthwise 640 bits corresponding to one unit page. The spatial light modulator optically modulates an applied signal light beam to a spatial on/off signal of light in response to the unit page series data from the encoder 25, and guides the modulated signal light to a lens 13. More specifically, the spatial light modulator 12 allows the signal light beam to pass through in response to the logical value "1" of the unit page series data as an electrical signal and cuts off the signal light beam in response to the logical value "0". And thereby, electro-optic conversion according to the contents of the respective bits in the unit page data is achieved and the modulated signal light beam as unit page series signal light is produced.

The signal light enters the recording medium 1 via the lens 13. In to the recording medium 1, other than the signal light, reference light enters at an angle β (hereinafter, referred to as "incident angle β") with a predetermined reference line perpendicular to the optical axis of the beam of the signal light.

Interference occurs between the signal light and the reference light within the recording medium 1 and the interference fringes are stored as a refractive index grating within the recording medium 1, and thereby, recording of data is performed. Further, plural pieces of two-dimensional plane data is subjected to angle multiple recording by allowing the reference light to enter while changing the incident angle β, and thereby, a large amount of information can be recorded.

When the recorded data is reproduced from the recording medium 1, only the reference light is entered into the refractive index grating of the recording medium 1 at the same incident angle β as that at the time of recording. That is, unlike at the time of recording, the signal light is not allowed to enter. Thereby, the diffracted light from the refractive index grating recorded within the recording medium 1 is guided through a lens 21 to a photodetector 22 such as a CCD (Charge Coupled Device). The photodetector 22 converts the light and shade of the incident light into strength of the electrical signal and outputs an analog electrical signal having a level in response to the intensity of the incident light to a decoder 26. The decoder 26 compares the analog signal with a predetermined amplitude value (slice level) and reproduces corresponding data of "1" and "0".

Optical strain, signal image displacement, and the like that occurs from the spatial light modulator to the photodetector by a recording medium when the recording medium is newly loaded must be allowed to fall within a predetermined range of specified values. Further, when a recording medium recorded by a certain recording and reproduction system is reproduced by another recording and reproduction system, the reproduced image is displaced largely due to, for example, variations of the positions from the recording medium to the CCD image pickup device at the times of recording and reproduction. Therefore, the CCD or the recording medium is required to be adjusted precisely according thereto. A defect that there is a problem in compatibility is taken for example.

Accordingly, as a problem of the invention to be solved, to provide a compatible hologram system is taken for example.

### DISCLOSURE OF THE INVENTION

A hologram system of the invention has a supporting part for loadably supporting a recording medium made of a photosensitive material such as photorefractive polymer, a hole burning material, or a photochromic material, a signal light generating part for allowing a coherent beam modulated in response to predetermined data to enter the recording medium and providing a three-dimensional light interference pattern therewithin to produce a refractive index grating, and a data processing part for detecting reproduced data by diffracted light from the refractive index grating and demodulating the data to the predetermined data, and the hologram system is characterized in that
the recording medium has a reference refractive index grating corresponding to a three-dimensional light interference pattern of a coherent light beam modulated in response to reference data in a reference data area in advance, and
the reproduced data is corrected in response to the reference data reproduced from the reference refractive index grating of the reference data area and reference data provided within a reference memory, and demodulated to the predetermined data.

### BRIEF DESCRIPTION OF THE DRAWINGS

Fig. 1 is a diagram showing a configuration of a conventional recording and reproduction system.
Fig. 2 is a side view showing a configuration of a hologram system according to the invention.
Fig. 3 is a plan view showing a constitution of a card type recording medium in the hologram system according to the invention.

### BEST MODE FOR CARRYING OUT THE INVENTION

Hereinafter, an embodiment of the invention will be described by referring to the drawings.

In a hologram system of the embodiment, when the recorded original data and the reproduced data are different to each other, the reproduced data is corrected based on the reference data held in a hologram recording and reproducing apparatus and a recording medium, respectively, and the original data is demodulated. The case where the recorded original data and the reproduced data are different to each other is a case where there is a difference between both of the data due to variations of recording information caused by the difference in recording formats such as the difference in amounts of page data, the individual difference between devices, recording error such as performance error of a recording medium, the individual difference between reproduction optical systems, and reproduction error such as changes due to disturbance.

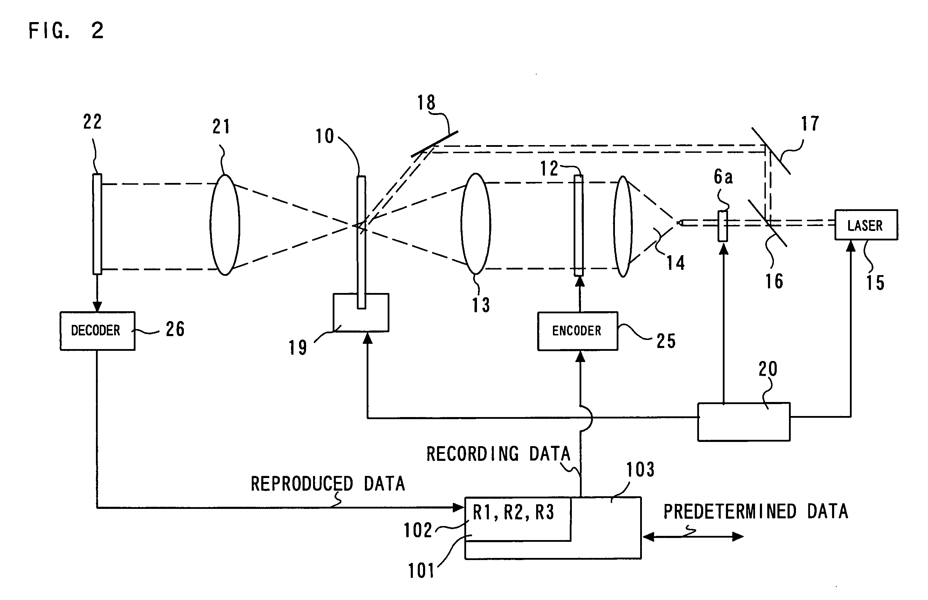

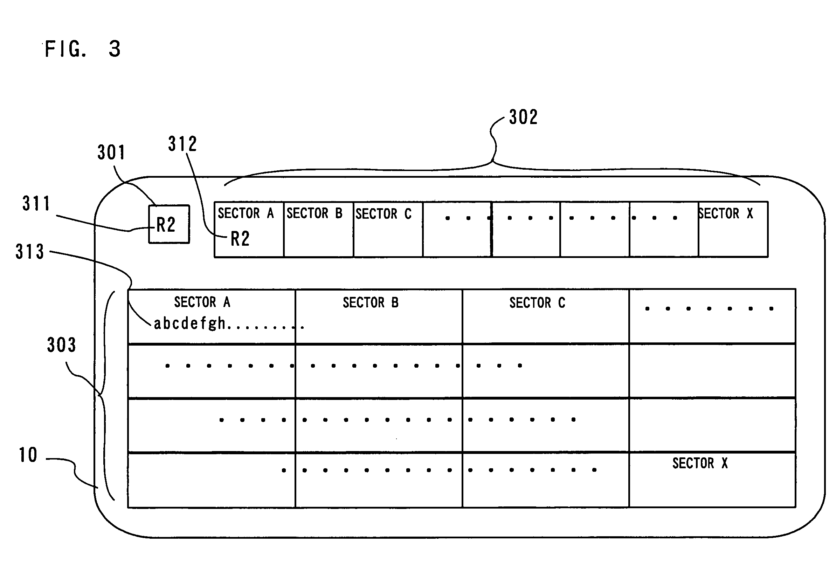

Figs. 2 and 3 show an example of a recording medium according to the invention and a hologram system including a hologram recording and reproducing apparatus using the medium.

In Fig. 3, a card type recording medium 10 made of a photorefractive polymer is shown. In the card type recording medium 10, there are provided with a reference data area 301, a sector data area 302 and a user data area 303 in parallel. In the reference data area 301, reference data 311, for example, R2 is recorded in the recording medium in advance before shipment. In the sector data area 302, respective pieces of sector data 312 are recorded in advance. In the user data area 303, user data 313 is recorded.

In the hologram system of the embodiment, reference data is defined with respect to each recording format. The reference data is recorded as recording format data with respect to each recording format in such a manner that R1 is defined for a low density recording medium having information of one page within the recording medium of 256 × 256 = 65536 bits, R2 for a middle density recording medium of 512 × 512 = 252144 bits, R3 for a high density recording medium of 1024 × 1024 = 104856 bits. These formats are like that there are differences between floppy disks of 1DD, 2DD, and 2HD, for example. Various pieces of reference data 311 with respect to other recording media are defined and recorded in the reference data area 301 of the recording medium before shipment.

Similarly, in the hologram recording and reproducing apparatus shown in Fig. 2, respective pieces of reference data 102 are also recorded within a reference memory 101 of a data processing unit 103 in advance.

When the recording medium 10 is loaded in a supporting part 19 of the hologram recording and reproducing apparatus, the reference data 311 of the reference data area 301 that has been recorded in advance before shipment is reproduced. And then, the discrimination of the kind of the recording medium 10 is performed, and then, the apparatus moves to each operation.

At the time of data recording, the user data 313 is recorded and, at the same time, the reference data 312 (for example, R2) defined in its recording medium format is recorded in the sector data area 302 determined so as to correspond to the sector of the recording medium 10 in which the user data is recorded.

At the time of data reproduction, the reference data 312 (here, R2) defined in the recording medium format recorded in the sector data area 302 is reproduced by either of hologram recording and reproducing apparatuses (by itself or another apparatus). The difference between the reproduced reference data and the reference data within the memory of the hologram recording and reproducing apparatus is the sum E1 of the recording error of the hologram recording and reproducing apparatus that has performed recording in the recording medium and the reproduction error of itself.

By performing demodulation on the reproduction of the data recorded in the recording medium while taking the difference E1 into consideration, even when the reproduced data is different from the predetermined data, the predetermined data can be recreated correctly. In the sector data area 302, other sector information such as data indices, amounts of data, data formats, for example, can be recorded as the sector data.

At the time of recording, the light beam output from a laser 15 is split by a beam splitter 16 into two of a light beam for signal that linearly advances and a light beam for reference that is deflected upwardly, and the beams are guided to optical paths of signal and reference light beam optical systems, respectively.

The light beam for signal that has passed through the beam splitter 16 enters the recording medium 10 through a shutter 6a, a light beam expander 14, the spatial light modulator 12, and the Fourier transform lens 13. The time for applying the signal light beam to the recording medium is controlled by an automatic shutter controlled by a controller, and the light beam is expanded into collimated light having a predetermined diameter by the beam expander 14. The spatial light modulator 12 is a two-dimensional flat LCD of lengthwise 480 × widthwise 640 pixels, for example, and converts the light beam from the beam expander 14 into signal light in response to the digital recording data supplied from the encoder 25. The light is spatially modulated in response to the recording page data by the spatial light modulator 12 so as to be transmitted or not transmitted with respect to each pixel according to a two-dimensional dot pattern such as a checkered pattern, for example, and then, Fourier transformed by the Fourier transform lens 13, condensed onto the recording medium 10, and thereby, is formed as a point image within the Fourier plane. The recording medium 10 is disposed so that the Fourier plane by the lens 13 may be in parallel with the surface of the recording medium 10.

On the other hand, in the reference light beam optical system, the reference light beam is reflected by mirrors 17 and 18, entered into the recording medium 10, and allowed to intersect and interfere with the signal light beam from the lens 13 in a position within the recording medium to form three-dimensional interference fringes. Here, the optical system of the mirror 18, the lens 13, etc. may be disposed so that the reference light and the signal light may interfere with each other, not on the Fourier plane, but before or behind the Fourier plane.

Thus, at the time of data recording, the signal light and the reference light are simultaneously applied onto a predetermined region within the recording medium 10, and the interference pattern is recorded as a refractive index grating with the refractive indices changed. The time for forming a hologram is controlled by the automatic shutter of a laser light source device.

The supporting part 19 that places the recording medium 10 in parallel with the plane perpendicular to the signal light optical axis, for example, is driven by a drive unit (not shown). The drive unit is controlled by a controller 20. The controller 20 drives the supporting part 19 to move and adjust the position of the recording medium 10 in response to the signal corresponding to the positioning data from the photodetector 22.

On the other hand, at the time of reproduction, the recorded recording medium 10 is disposed on the supporting part 19 as well as at the time of recording, and closing of the shutter 6a and the automatic shutter control of the laser light source device are performed by the control of the controller 20 to allow the reference light from the mirror 18 only to enter.

The diffracted light from the interference fringes recorded within the recording medium 10 enters the photodetector 22 through an inverse Fourier transform lens 21 as reproduction light, and forms the reproduced image. The photodetector 22 has a two-dimensional flat light receiving surface of lengthwise 480 × widthwise 640 pixels same as that of the spatial light modulator 12, for example, converts the received reproduction light into an electrical signal, and outputs it to the decoder 26. The decoder 26 compares the input electrical signal with a predetermined slice level and outputs binary digital data.

By the way, in the above example, the card type recording medium 10 is used, however, the same recording and reproduction system can be realized using a recording medium having a disk shape or the like.

## Claims

1. A hologram system having a supporting part for loadably supporting a recording medium made of a photosensitive material, a signal generating part for allowing a coherent beam modulated in response to predetermined data to enter said recording medium and providing a three-dimensional light interference pattern therewithin to produce a diffraction grating, and a data processing part for detecting reproduced data by diffracted light from said diffraction grating and demodulating the data to the predetermined data, the hologram system is **characterized in that**
said recording medium has a reference data area in which a reference diffraction grating corresponding to a three-dimensional light interference pattern of a coherent light beam modulated in response to reference data has been stored in advance, a sector data area in which sector data is recorded, and a user data area in which user data is recorded, and
said reproduced data is corrected in response to said reference data reproduced from said reference diffraction grating stored in said reference data area, said sector data reproduced from said sector area, and reference data provided within a reference memory of said data processing part, and demodulated to the predetermined data.

2. A hologram system according to claim 1, wherein said signal light generating part includes a reference light generating part for allowing a coherent reference light beam of a first wavelength as said coherent light beam to enter said recording medium, modulates a coherent signal light beam of the first wavelength as said coherent light beam in response to said data, allows the beam to enter said recording medium and intersect with said coherent reference light beam therewithin to produce a three-dimensional light interference pattern with said reference light.

3. A hologram system according to claim 1 or 2, wherein said reference data within said reference memory of said data processing part includes various kinds of recording format data according to various recording media.

4. A hologram system according to any one of claims 1 to 3, wherein reference data that said reference diffraction grating stored in said reference data area of said recording medium has includes recording format data of said recording medium.

5. A hologram system according to any one of claims 1 to 4, wherein sector data recorded in said sector data area of said recording medium includes at least recording format data of said recording medium.
